(19)

Europäisches Patentamt

European Patent Office

Office européen des brevets

(11) **EP 4 433 532 B1**

(12) **EUROPEAN PATENT SPECIFICATION**

(45) Date of publication and mention of the grant of the patent:
**02.04.2025 Bulletin 2025/14**

(21) Application number: **23785967.3**

(22) Date of filing: **17.10.2023**

(51) International Patent Classification (IPC):
*C08J 11/22* (2006.01)

(52) Cooperative Patent Classification (CPC):
**C08J 11/22;** C08J 2317/00; Y02W 30/62

(86) International application number:
**PCT/EP2023/078721**

(87) International publication number:
**WO 2024/088814 (02.05.2024 Gazette 2024/18)**

(54) **DEVULCANIZED RUBBER, PROCESS FOR PRODUCING DEVULCANIZED RUBBER, AND USE THEREOF**

DEVULKANISIERTER KAUTSCHUK, VERFAHREN ZUR HERSTELLUNG DES DEVULKANISIERTEN KAUTSCHUKS UND DESSEN VERWENDUNG

CAOUTCHOUC DÉVULCANISÉ, PROCÉDÉ DE FABRICATION DE CAOUTCHOUC DÉVULCANISÉ ET SON UTILISATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **27.10.2022 EP 22204116**

(43) Date of publication of application:
**25.09.2024 Bulletin 2024/39**

(73) Proprietor: **Evonik Operations GmbH**
**45128 Essen (DE)**

(72) Inventors:
- **KRAFCZYK, Roland**
  **79618 Rheinfelden (DE)**
- **MANI, Christian**
  **44879 Bochum (DE)**
- **SCHNELL, Rupert**
  **67551 Worms (DE)**
- **PAASCHE, Alexander**
  **45721 Haltern am See (DE)**

(74) Representative: **Evonik Patent Association**
**c/o Evonik Industries AG**
**IP Management**
**Postcode 84/339**
**Rodenbacher Chaussee 4**
**63457 Hanau (DE)**

(56) References cited:
**CN-A- 110 510 631     US-B2- 9 683 088**

- **GHOSH ROUNAK ET AL: "PDENG THESIS DESIGN OF A DEVULCANIZATION PROCESS FOR TIRE MATERIAL IN A TWIN SCREW EXTRUDER In co-operation with Under the joint guidance of", 27 May 2021 (2021-05-27), pages 50 - 51, XP093032629, Retrieved from the Internet <URL:https://ris.utwente.nl/ws/portalfiles/portal/269007242/ PDEng_Thesis_Rounak_Ghosh_Public_.pdf> [retrieved on 20230317]**
- **LUCIA ASARO ET AL: "Recycling of rubber wastes by devulcanization", RESOURCES, CONSERVATION AND RECYCLING, vol. 133, 1 June 2018 (2018-06-01), AMSTERDAM, NL, pages 250 - 262, XP055683127, ISSN: 0921-3449, DOI: 10.1016/j.resconrec.2018.02.016**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to devulcanized rubber, to processes for producing it and to its use.

An objective of tyremakers is to increase the proportion of recycled rubber in tyremaking. Granulated scrap tyres, MRP (micronized rubber powder) and granules from old tyre treads can be reused only conditionally and to a very small extent, in order not to detract significantly from the performance of the tyres. The reuse of granulated scrap tyres is limited, since the rubber particles involved have already been sulfur-crosslinked (vulcanized), whereas re-use requires unvulcanized particles having significantly lower viscosities.

It is known that disulfides such as diphenyl disulfide (DPDS) (Asaro, L.; Gratton, M.; Seghar, S.; Hocine, N.A. Recycling of rubber wastes by devulcanization. Resour. Conserv. Recycl. 2018, 133, 250-262; Edwards, D.W., Danon, B., van der Gryp, P., Georgens, J.F., 2016. Quantifying and comparing the selectivity for crosslink scission in mechanical and mechanochemical devulcanization processes. J. Appl. Polym. Sci. 133 (37), 1-10), dibutyl disulfides (DBDS), dibenzamidodiphenyl sulfides (DBD) and polysulfides too such as triethoxysilylpropyl tetrasulfides (TESPT) (US 9,683,088 B2) are capable of devulcanizing vulcanized rubber mixtures. In devulcanization, which may take place at elevated temperatures in a kneader or extruder, for example, the sulfur bridges are opened thermally and/or radically and are prevented from recombining by grafting with scavengers such as disulfides. This produces chemically devulcanized rubber particles (Saiwari, S., Dierkes, W.K., Noordermeer, J.W., 2018. Recycling of individual Waste rubber, in: Rubber Recycling: Challenges and Developments, 1st edition, Royal Society of Chemistry, pp. 186-232).

US 5,258,413 discloses continuous devulcanization of vulcanized elastomers by ultrasound.

Furthermore, US 11,453,758 B2 discloses a process for continuous production of devulcanized rubber by means of a multistage screw extruder.

A disadvantage affecting the use of the common devulcanizing agents is that the rubber, under thermal load, is additionally degraded by opening of C-C bonds. As a result of the molar mass reduced in this way, rubber particles devulcanized with disulfides, when reused, exhibit significantly lower tensile strain properties than newly produced rubber.

It is an object of the present invention to provide devulcanized rubber in which as few C-C bonds are possible are destroyed and consequently on re-use in rubber mixtures the tensile strain behaviour is improved relative to the prior art.

At temperatures below the thermal degradation of the polymers, the value of the total area of visible particles (TAVP) may be employed as a measure of the selectivity of the devulcanization. The TAVP is determined by compounding the devulcanized rubber with a so-called white rubber mixture. The TAVP here describes the size of the total area of the visible rubber particles after the devulcanization. The more selective the devulcanization has been, the smaller the total area of the visible particles and the smaller, consequently, the resultant TAVP value.

One subject of the invention is devulcanized rubber which is characterized in that the TAVP is < 2.7, preferably 0.8-1.8.

The devulcanized rubber of the invention may comprise butadiene and/or styrene structural units. The devulcanized rubber may preferably comprise SSBR and BR structural units, and the SSBR and BR may be unfunctionalized or functionalized, for example with epoxy, silyl or amine groups.

The devulcanized rubber of the invention may contain 10 - 200 phr, preferably 20 - 120 phr, more preferably 30 - 100 phr of silica.

The devulcanized rubber of the invention may have a (network breakdown) value NWB of > 50%.

The devulcanized rubber of the invention may have an $f_{sol}$ of $\geq$ 12.0%.

The devulcanized rubber of the invention may have a tensile strength value TS of > 7.8 MPa.

A further subject of the invention is a process for producing the devulcanized rubber of the invention, which is characterized in that vulcanized rubber is comminuted and reacted with vinylsilane as devulcanizing agent at temperatures between 140 - 180°C, preferably between 150 - 160°C, for 4 to 7 minutes with a concentration of devulcanizing agent of 4 to 6 wt%, based on the vulcanized rubber, and with an energy input during the reaction of > 130 kNm, preferably 150 - 180 kNm.

The vulcanized rubber may be comminuted by means of waterjet, cryogenic or ambient-mechanical milling. The particle size of the comminuted rubber may be 50 $\mu$m to 5000 $\mu$m, preferably 50 $\mu$m to 2000 $\mu$m, more preferably 75 $\mu$m to 1500 $\mu$m.

The vulcanized rubber may derive from treads of scrap tyres or from the entire comminuted scrap tyre.

Before the vinylsilane is added, the comminuted vulcanized rubber may be swollen with oil, preferably distilled aromatic oil.

The vinylsilane may be a silane of the formula I

$$R^1R^2R^3Si\ R^4\text{-}CH=CH_2 \qquad I),$$

where $R^1$, $R^2$ and $R^3$ independently of one another are H, C1-C8 alkyl, C1-C8 alkoxy or phenoxy and $R^4$ is a divalent aliphatic and/or aromatic, unbranched or branched hydrocarbon group or a bond.

The vinylsilane may preferably be a silane of the formula I where $R^1$, $R^2$ and $R^3$ are C1-C8 alkoxy.

The vinylsilane may more preferably be a vinyltrialkoxysilane, very preferably vinyltriethoxysilane.

The vinylsilane may be an oligomer of vinylsilanes and/or cooligomer of vinyl- with alkylsilanes.

The vinylsilane may be used in amounts of 1-20 wt%, preferably 3-10 wt%, based on the vulcanized rubber used.

The vinylsilane may be used together with peroxides. Peroxides used may comprise dicumyl peroxide and/or benzoyl peroxide. Preferably it is possible to use dicumyl peroxide, for example DYNASYLAN® SILFIN 301 (mixture of vinyltriethoxysilane and dicumyl peroxide) from Evonik Industries AG.

The peroxide may be used in amounts of 1-20 wt%, preferably 1-10 wt%, based on the vinylsilane.

The reaction (devulcanization) may be carried out in a kneader, for example a Brabender mixer, E kneader or N kneader, or in an extruder, for example in a single-screw extruder, twin-screw extruder or planetary roller extruder.

In the process of the invention, it is preferably possible to comminute vulcanized rubber and react it with vinyltriethoxysilane and peroxide at temperatures between 140 - 180°C.

In the process of the invention it is possible more preferably to comminute vulcanized rubber from scrap tyres and react it with vinyltriethoxysilane and dicumyl peroxide at temperatures between 140 - 180°C.

A further subject of the invention is the use of vinylsilanes, optionally with addition of peroxides, for the devulcanization of vulcanizates.

A further subject of the invention is the use of the devulcanized rubber of the invention as raw material in vulcanized rubber mixtures.

A further subject of the invention are vulcanized rubber mixtures comprising the devulcanized rubber of the invention.

The invention is advantageous in that the proportion of degraded polymer chains is significantly reduced by comparison with devulcanizing reagents from the prior art and consequently, when the devulcanized rubber is reused in new rubber mixtures, the tensile strain properties are significantly improved, and so the proportion of devulcanized rubber in new rubber mixtures can be increased.

Measurement methods

The following methods are employed for characterization:

**Tensile strain tests**

The tensile strain properties are carried out after the revulcanization step on a Z010 tensile strength testing machine from Zwich Roell GmbH & Co. KG in accordance with ASTM D412- 16e1.

**Determination of Mooney viscosity**

Viscosity measurements are carried out on an MV 2000 VS viscometer from Alpha Technologies GmbH in accordance with ASTM D1646-19a.

**Determination of crosslinking density**

The crosslinking density of the devulcanized rubber is determined in accordance with ASTM D6814-02 on the basis of the Flory-Rehner equation. For this the devulcanized rubber is first dried overnight at 80°C in a Heraeus-brand oven and weighed after cooling to give the parameter m1. The rubber sample is then wrapped in a Whatman-brand filter paper and placed in a flask filled with 500 ml of acetone. The flask is subsequently attached to a Soxhlet apparatus and heated at 56°C for 48 hours. After cooling, the rubber sample is again dried overnight in the oven at 80°C, the filter paper is removed, and the dried rubber sample is weighed to give the parameter m2. The rubber sample subsequently is again wrapped in filter paper and placed in a flask filled with 500 ml of tetrahydrofuran (THF). The flask is attached to a Soxhlet apparatus and heated at 66°C for 72 hours. After cooling, the rubber sample is again dried overnight in the oven at 80°C, the filter paper is removed, and the dried rubber sample is weighed to give the parameter m3. The rubber sample is thereafter placed into a 50 ml vial, 40 ml of toluene are added, and the sample is left to swell for at least 4 days until equilibrium is reached. After swelling, the rubber sample is taken from the toluene solution and weighed again to give the parameter m4.

The proportion of the sol fraction is calculated as follows: $$f_{sol} = \frac{m1-m3}{m1} \times 100$$ .

The network density v is subsequently calculated with the Flory-Rehner equation:

$$\nu = \frac{f_p + \chi \times f_p^2 + \ln\,(1 - f_p)}{V_{ms} \times \left(0.5 f_p - \sqrt[3]{f_p}\right)}.$$

In this equation, $v_{ms}$ is the molar volume of the swelling agent and $\chi$ is the interaction parameter, which here is 0.39. The volume fraction $f_p$ is calculated as follows:

$$f_p = \frac{m1}{m1 + m_s \times \frac{\rho_p}{\rho_s}}.$$

In this equation, $\rho_p$ is the density of the rubber sample and $\rho_s$ is the density of the swelling agent. The mass of the swelling agent, $m_s$, is determined as follows: $m_s = m_4 - m_1$.

The proportion of network breakdown, NWB, is calculated as the difference between the network density of the vulcanized rubber ($v_1$) and the network density of the devulcanized rubber sample ($v_2$):

$$NWB = \left(1 - \frac{v_2}{v_1}\right) \times 100$$

(Verbruggen, M., 2007. Devulcanization of EPDM rubber: a mechanistic study into a successful method, pp. 29-33, PhD thesis, University of Twente, The Netherlands).

**TAVP - White rubber analysis**

The so-called white rubber analysis can be used to determine the total area of visible particles (TAVP). For this it is necessary first to prepare a specimen. The $TiO_2$ and MBTS (mercaptobenzothiazolesulfenamide) substances used for this purpose are obtained from Sigma Aldrich.

To prepare the specimen, in an initial compounding step, 100 phr of the polybutadiene rubber CB24 are mixed with 85 phr of $TiO_2$, 5 phr of ZnO and 1 phr of stearic acid and the mixture is then processed at 60°C for four minutes with a stirring speed of 100 rpm in a Brabender internal mixer. The resultant white rubber mixture is left to stand at room temperature for a day. The next day, 171 phr of the white rubber mixture are mixed with 5 phr of sulfur and 2.5 phr of MBTS and the mixture is vulcanized at 60°C and 100 rpm for two minutes in the Brabender internal mixer.

The white rubber mixture is subsequently mixed with the devulcanized rubber in a ratio of 90:10 and masticated at RT for three minutes in a double-roll mill. This rubber mixture is then vulcanized in a Wickert press at 170°C for ten minutes and processed to give discs 5 mm thick with a radius of 50 mm. The vulcanized rubber is subsequently cooled in liquid nitrogen for 15 minutes and the surface is polished with abrasive paper (120 grade).

For determining the TAVP, the specimen is investigated using the Keyence-brand VHX 5000 3D digital microscope and evaluated with the aid of the on-board ImageJ software. The settings made on the digital microscope for this purpose are as follows:

- Parameter: condition
- Imaging mode: 2D stitching
- Stitching: 5X6
- Zoom: 20x-30x
- Light: full-ring
- Cover area: round
- Base to lens angle: 90°

**Examples:**

Model compound

The devulcanization experiments and characterization of materials below are set out and elucidated using a model compound by way of example. The devulcanization experiments and characterization of material were conducted at the University of Twente in the research groups of Prof. Dr Blume and Dr Dierkes. The production of the model compound is guided by the standard formulation for car tyre treads according to Table 1.

Table 1

| Constituents | Name | Amount (phr) |
|---|---|---|
| Styrene-butadiene rubber (SBR) | Sprintan SLR 4601 | 70 |
| Polybutadiene rubber (BR) | CB 24 | 30 |
| Silica (SiO$_2$) | ULTRASIL® 7000 GR | 80 |
| Silane | Si 266™ | 5.8 |
| Zinc oxide | ZnO | 3 |
| Stearic acid | Stearic acid | 2 |
| TDAE oil | Vivatec | 25 |
| Sulfur | Sulfur | 1.5 |
| CBS | Santocure CBS | 1.7 |
| DPG | Perkacit DPG | 2.5 |

The Sprintan SLR 4601 was supplied by Trinseo, the polybutadiene rubber CB 24 by Arlanxeo, ULTRASIL® 7000 GR by Evonik, the zinc oxide and stearic acid and the sulfur by Merck, the TDAE oil Vivatec 500 by Hansen & Rosenthal; the accelerators Santocure CBS and Perkacit DPG were supplied by Flexsys, and the Si 266™ by Evonik.

The model compound was produced using a Brabender-brand 350S internal mixer having a capacity of 390 ml, and a two-roll mill from Schwabenthan.

Production of the model compound:

First of all the polymers SBR (70 phr) and BR (30 phr) were placed into the internal mixer and masticated at 80°C at a speed of 70 rpm for one minute. Subsequently ULTRASIL® 7000 GR (40 phr) and Si 266™ (2.9 phr) were added and the mixture was kneaded for a further minute under the reaction conditions above. Thereafter the following constituents were added: 40 phr of ULTRASIL® 7000 GR, 2.9 phr of Si 266™, 3 phr of ZnO, 2 phr of stearic acid and 25 phr of TDAE oil. This mixture was initially kneaded for one minute at 140°C. The temperature was then increased to 145°C and the mixture was mixed at 70 rpm for a further four minutes. This mixture was then left to stand overnight at room temperature (RT). The next day, the mixture was transferred to the two-roll mill and processed at RT. The roll speed of the front roll was set to 20 rpm and that of the rear roll to 25 rpm, with a roll nip of 1.5 - 2.0 mm. After a mastication time of two minutes, the crosslinking system, consisting of 1.5 phr of sulfur, 1.7 phr of CBS and 2.5 phr of DPG, was added and the mixture was processed for a further seven minutes. The resulting mixture was subsequently pressed to give plates 2 mm thick at a temperature of 160°C with a vulcanization time of t-95 (i.e. 1305 seconds).

Devulcanization of the model compound:

In the next step, the vulcanized material was initially placed in liquid nitrogen for 3 minutes and then milled in a Fritsch laboratory mill to a mesh size of 0.7 mm.

The subsequent devulcanization was carried out in a 50 cm$^3$ internal mixer from Brabender, which is equipped with a tangential and counter-rotating rotor drive. The system in which the vulcanization was carried out included a press from Wickert.

As a preliminary to the devulcanization of the model compound, the milled material was first swollen with TDAE oil as follows: 400 g of the milled model compound were admixed with 20 g (5 wt%) of TDAE oil and stirred with a spoon for 10 minutes at room temperature. This mixture was left to stand at RT overnight and on the next day was swollen with the devulcanizing agent. For this, 105 g of the swollen compound (containing 100 g of milled model compound + 5 g of TDAE oil) were admixed with the corresponding concentration of the devulcanizing agent (wt% based on the milled model compound). The mixture was stirred with a spoon for 10 minutes at RT and then left to stand at room temperature overnight. The model compound was subsequently placed into the internal mixer and devulcanized at an internal-mixer temperature T (°C) and a rotor speed R (rpm) for a reaction time t (min). After the devulcanization step, the devulcanized rubber was transferred to the double-roll mill and processed at RT. Here, the roll speed of the front roll was set at 20 rpm and that of the rear roll at 25 rpm, with a roll nip of 0.2 mm - 1.0 mm being selected.

Revulcanization of the model compound

For the revulcanization of the model compound, the devulcanized rubber was processed in the double-roll mill. The roll speed of the front roll was set at 20 rpm, that of the rear roll at 25 rpm, and the roll nips were adjusted to 0.5 mm - 1.0 mm. The devulcanized rubber was initially masticated at RT for one minute, after which 4 g of ZnO and 2 g of stearic acid were added. The mixture was again masticated at RT for two minutes. Then 1.5 g of sulfur and 1.7 g of CBS were added and the mixture was masticated for four minutes more. The mixture was left to stand overnight at RT and on the next day was vulcanized at 160°C and pressed to give plates 2 mm thick.

In accordance with the protocol stated above, the following devulcanizates (or devulcanized rubber samples) were produced with the various devulcanizing agents (DA) under the following conditions and tested (Table 2).

Table 2

| # | DA | Reaction conditions | | | | | | | | |
| | | T (°C) | DT (min) | C (%) | TEI (kNm) | TAVP (%) | TS (MPa) | EAB (%) | NWB (%) | $f_{sol}$ (%) |
|---|---|---|---|---|---|---|---|---|---|---|
| | | | | | | | | | | |
| 1 | SILFIN | 130 | 4 | 5 | 165 | 3.22 | 7.6 | 91 | 37 | 7.6 |
| 2 | SILFIN | 140 | 4 | 5 | 165 | 2.45 | 8.6 | 108 | 42 | 8.2 |
| 3 | SILFIN | 150 | 4 | 5 | 165 | 1.9 | 9.2 | 111 | 46 | 10.4 |
| 4 | SILFIN | 155 | 4 | 5 | 165 | 1.72 | 9.2 | 110 | 51 | 11.3 |
| 5 | SILFIN | 160 | 4 | 5 | 165 | 1.66 | 9.3 | 106 | 55 | 12.1 |
| 6 | SILFIN | 170 | 4 | 5 | 165 | 1.29 | 9.4 | 94 | 59 | 14.6 |
| 7 | SILFIN | 180 | 4 | 5 | 165 | 0.93 | 8.9 | 88 | 63 | 16.7 |
| 8 | SILFIN | 155 | 5 | 5 | 165 | 1.66 | 9.3 | 109 | 52 | 12 |
| 9 | SILFIN | 155 | 6 | 5 | 165 | 1 | 9.4 | 113 | 54 | 13.6 |
| 10 | SILFIN | 155 | 7 | 5 | 165 | 0.55 | 9.1 | 103 | 57 | 15.3 |
| 11 | SILFIN | 155 | 6 | 5 | 45 | 6.21 | 5.3 | 42 | 22 | 4.7 |
| 12 | SILFIN | 155 | 6 | 5 | 75 | 4.99 | 6.6 | 67 | 31 | 6.4 |
| 13 | SILFIN | 155 | 6 | 5 | 105 | 3.25 | 7.9 | 82 | 38 | 8.5 |
| 14 | SILFIN | 155 | 6 | 5 | 135 | 2.28 | 8.8 | 106 | 45 | 10.5 |
| 15 | SILFIN | 155 | 6 | 4 | 165 | 1.14 | 9.3 | 106 | 51 | 13.5 |
| 16 | SILFIN | 155 | 6 | 6 | 165 | 0.8 | 9.4 | 108 | 57 | 11.9 |
| | | | | | | | | | | |
| 17 | VTEO | 130 | 4 | 5 | 105 | 5.3 | 5.5 | 41 | - | - |
| 18 | VTEO | 130 | 4 | 5 | 135 | 4.1 | 6.7 | 48 | - | - |
| 19 | VTEO | 130 | 4 | 5 | 165 | 3.7 | 7.2 | 55 | - | - |
| 20 | VTEO | 140 | 4 | 5 | 165 | 2.4 | 8.5 | 88 | - | - |
| 21 | VTEO | 140 | 6 | 5 | 165 | 1.91 | 9 | 95 | 40 | 8.5 |
| 22 | VTEO | 140 | 6 | 3 | 165 | 3.28 | 7.5 | 63 | - | - |
| 23 | VTEO | 140 | 6 | 4 | 165 | 2.58 | 8.2 | 76 | - | - |
| 24 | VTEO | 140 | 6 | 6 | 165 | 1.58 | 9.0 | 88 | - | - |
| 25 | VTEO | 160 | 6 | 5 | 165 | 1.94 | 8.9 | 91 | 44 | 11.4 |
| 26 | VTEO | 170 | 6 | 5 | 165 | 1.85 | 8.3 | 76 | - | - |
| 27 | VTEO | 180 | 6 | 5 | 165 | 1.47 | 7.9 | 68 | - | - |
| | | | | | | | | | | |

(continued)

| # | DA | Reaction conditions | | | | | | | | |
|---|---|---|---|---|---|---|---|---|---|---|
| | | T (°C) | DT (min) | C (%) | TEI (kNm) | TAVP (%) | TS (MPa) | EAB (%) | NWB (%) | $f_{sol}$ (%) |
| 28 | TESPT | 130 | 4 | 5 | 105 | 5.64 | 4.7 | 33 | - | - |
| 29 | TESPT | 130 | 4 | 5 | 135 | 4.92 | 5.5 | 36 | - | - |
| 30 | TESPT | 130 | 4 | 5 | 165 | 4.3 | 6.5 | 42 | - | - |
| 31 | TESPT | 140 | 4 | 5 | 165 | 3.83 | 7.4 | 72 | 32 | 6.6 |
| 32 | TESPT | 140 | 6 | 5 | 165 | 3.52 | 7.5 | 69 | 38 | 8.2 |
| 33 | TESPT | 160 | 4 | 5 | 165 | 3.77 | 7.4 | 65 | 45 | 10.2 |
| 34 | TESPT | 160 | 6 | 5 | 165 | 4.17 | 6.9 | 63 | 49 | 12.5 |
| 35 | TESPT | 170 | 6 | 5 | 165 | 3.84 | 7.1 | 76 | - | - |
| 36 | TESPT | 180 | 6 | 5 | 165 | 2.98 | 7.7 | 79 | - | - |
| 37 | TESPT | 180 | 6 | 3 | 165 | 4.38 | 6.1 | 43 | - | - |
| 38 | TESPT | 180 | 6 | 4 | 165 | 3.48 | 7.3 | 67 | - | - |
| | | | | | | | | | | |
| 39 | DPDS | 140 | 4 | 5 | 165 | 5.16 | 4.7 | 28 | - | - |
| 40 | DPDS | 140 | 5 | 5 | 165 | 4.52 | 5.6 | 31 | - | - |
| 41 | DPDS | 140 | 6 | 5 | 165 | 3.86 | 6.9 | 42 | - | - |
| 42 | DPDS | 160 | 6 | 5 | 165 | 3.16 | 7.1 | 58 | - | - |
| 43 | DPDS | 170 | 6 | 5 | 165 | 2.96 | 7.2 | 62 | - | - |
| 44 | DPDS | 180 | 6 | 5 | 165 | 2.89 | 6.9 | 51 | - | - |
| 45 | DPDS | 170 | 6 | 3 | 165 | 3.7 | 6.5 | 39 | - | - |
| 46 | DPDS | 170 | 6 | 4 | 165 | 3.35 | 6.8 | 54 | - | - |
| 47 | DPDS | 170 | 6 | 6 | 165 | 2.79 | 7 | 68 | - | - |
| | | | | | | | | | | |

T = temperature; DT = dwell time; C = DA concentration; TEI = total energy input; TAVP = total area of visible particles; TS = tensile strength; EAB = elongation at break; NWB = network breakdown; $f_{sol}$ = sol fraction

The devulcanized rubber of the invention is characterized in that it possesses a TAVP of less than 2.7%. The TAVP can be controlled through, among others, the operating conditions of temperature (T), dwell time in the internal mixer (DT), devulcanizing agent concentration (C), and the total energy input (TEI) in the internal mixer. In principle it is the case that the lower the TAVP, the more selective and efficient the devulcanization. As a yardstick for the quality of the devulcanization it is likewise possible to employ the degree of network breakdown (NWB). A higher network breakdown is considered here to be desirable. As the devulcanization temperature goes up, the TAVP drops and the NWB increases. However, the TAVP is meaningful only at temperatures below the thermal degradation of the polymer. Below the degradation temperature of the polymer, a low TAVP leads to an improvement in the mechanical properties of the revulcanized material, as may be observed from an increasing tensile strength (TS) and tensile elongation (EAB). At temperatures above the thermal degradation of the polymer, a low TAVP is attributable to the polymer degradation and not to the selective elimination of sulfur bridges. In this temperature range it is the case that the tensile strength (TS) and tensile elongation (EAB) of the revulcanized materials become poorer, i.e. lower, in spite of low TAVP values.

From the overview table it is apparent that SILFIN (DYNASYLAN® SILFIN 301) and VTEO (vinyltriethoxysilane), at temperatures between 140-180°C, dwell times between 4-7 min, devulcanizing agent concentrations between 4-6 wt% and energy inputs above 130 kNm, furnish the devulcanized rubber of the invention.

Temperatures below 140°C (see Table 2, # 1, 17-19) result in high TAVP values, this being attributable to insufficient devulcanization. The opening of sulfur bridges and the radical reactions proceed more effectively beyond 140°C. Beyond a temperature of around 180°C, the tensile strength drops; this may be explained by the onset of the thermal degradation of the polymer (see Table 2, # 7, 27). Above the thermal degradation temperature, the mechanical properties of TS and EAB drop as TAVP values become smaller (see Table 2, # 7). The influence of the total energy input (TEI) on the selectivity of the devulcanization is apparent from entries including Table 2, # 9, 11-14. This indicates that the selectivity of the devulcanization likewise rises with increasing energy input of the internal mixer.

The devulcanization experiments conducted with the devulcanizing agents TESPT and DPDS, respectively (see Table 2, # 28-47), show that the devulcanized rubber of the invention cannot be achieved with the prior art.

## Claims

1. Devulcanized rubber obtained by reaction of vulcanized rubber with vinylsilane, **characterized in that** the Total Area of Visible Particles (TAVP)of the devulcanized rubber is < 2.7 %, the TAVP being measured as described in the description.

2. Devulcanized rubber according to Claim 1, **characterized in that** it comprises butadiene and/or styrene structural units.

3. Devulcanized rubber according to Claim 1, **characterized in that** it contains 10 - 200 phr, preferably 20 - 120 phr, more preferably 30 - 100 phr of silica.

4. Devulcanized rubber according to Claim 1, **characterized in that** it has an NWB of > 50 %, the NWB being measured as described in the description.

5. Devulcanized rubber according to Claim 1, **characterized in that** it has an $f_{sol}$ of $\geq$ 12.0 %, the $f_{sol}$ being measured as described in the description.

6. Process for producing the devulcanized rubber according to Claim 1, **characterized in that** vulcanized rubber is comminuted and reacted with vinylsilane as devulcanizing agent at temperatures between 140 - 180°C for 4 to 7 minutes with a concentration of devulcanizing agent of 4 to 6 wt%, based on the vulcanized rubber, and with an energy input during the reaction of > 140 kNm.

7. Process for producing the devulcanized rubber according to Claim 6, **characterized in that** the vulcanized rubber is comminuted by means of waterjet, cryogenic or ambient-mechanical milling.

8. Process for producing the devulcanized rubber according to Claim 6, **characterized in that** before the vinylsilane is added, the comminuted vulcanized rubber is swollen with oil.

9. Process for producing the devulcanized rubber according to Claim 6, **characterized in that** the vinylsilane used comprises a vinyltrialkoxysilane, preferably vinyltriethoxysilane.

10. Process for producing the devulcanized rubber according to Claim 6, **characterized in that** the vinylsilane is used in amounts of 1-20 wt%, preferably 3-10 wt%, based on the vulcanized rubber used.

11. Process for producing the devulcanized rubber according to Claim 6, **characterized in that** the vinylsilane is used together with peroxides.

12. Process for producing the devulcanized rubber according to Claim 6, **characterized in that** peroxides used comprise dicumyl peroxide and/or benzoyl peroxide.

13. Process for producing the devulcanized rubber according to Claim 6, **characterized in that** the peroxide is used in amounts of 1-20 wt%, preferably 1-10 wt%, based on the vinylsilane.

14. Process for producing the devulcanized rubber according to Claim 6, **characterized in that** vulcanized rubber from scrap tyres is comminuted and the comminuted rubber is swollen with oil and devulcanized with vinyltriethoxysilane and dicumyl peroxide.

15. Use of vinylsilanes, optionally with addition of peroxides, for the devulcanization of vulcanizates.

16. Use of the devulcanized rubber according to Claim 1 as raw material in vulcanized rubber mixtures.

17. Vulcanized rubber mixtures comprising the devulcanized rubber according to Claim 1.

**Patentansprüche**

1. Devulkanisierter Kautschuk, erhalten durch Reaktion von vulkanisiertem Kautschuk mit Vinylsilan, **dadurch gekennzeichnet, dass** die Total Area of Visible Particles (TAVP) des devulkanisierten Kautschuks < 2,7 % ist, wobei die TAVP gemäß den Angaben in der Beschreibung gemessen wird.

2. Devulkanisierter Kautschuk gemäß Anspruch 1, **dadurch gekennzeichnet, dass** dieser Butadien- und/oder Styrol-Struktureinheiten enthält.

3. Devulkanisierter Kautschuk gemäß Anspruch 1, **dadurch gekennzeichnet, dass** dieser 10 - 200 phr, vorzugsweise 20 - 120 phr, besonders bevorzugt 30 - 100 phr, Kieselsäure enthält.

4. Devulkanisierter Kautschuk gemäß Anspruch 1, **dadurch gekennzeichnet, dass** dieser einen NWB-Wert von > 50 % hat, wobei der NWB-Wert gemäß den Angaben in der Beschreibung gemessen wird.

5. Devulkanisierter Kautschuk gemäß Anspruch 1, **dadurch gekennzeichnet, dass** dieser einen $f_{sol}$-Wert von ≥ 12,0 % aufweist, wobei der $f_{sol}$-Wert gemäß den Angaben in der Beschreibung gemessen wird.

6. Verfahren zur Herstellung des devulkanisierten Kautschuks gemäß Anspruch 1, **dadurch gekennzeichnet, dass** man vulkanisierten Kautschuk zerkleinert und mit Vinylsilan als Devulkanisationsmittel bei Temperaturen zwischen 140 - 180 °C für 4 bis 7 Minuten, einer Konzentration an Devulkanisationsmittel von 4 bis 6 Gew.-%, bezogen auf den vulkanisierten Kautschuk, und einem Energieeintrag während der Umsetzung von > 140 kNm umsetzt.

7. Verfahren zur Herstellung des devulkanisierten Kautschuks gemäß Anspruch 6, **dadurch gekennzeichnet, dass** man den vulkanisierten Kautschuk mittels Wasserstrahl-, kryogener oder ambient-mechanischer Vermahlung zerkleinert.

8. Verfahren zur Herstellung des devulkanisierten Kautschuks gemäß Anspruch 6, **dadurch gekennzeichnet, dass** man vor der Zugabe des Vinylsilans den zerkleinerten vulkanisierten Kautschuk mit Öl quillt.

9. Verfahren zur Herstellung des devulkanisierten Kautschuks gemäß Anspruch 6, **dadurch gekennzeichnet, dass** man als Vinylsilan ein Vinyltrialkoxysilan, bevorzugt Vinyltriethoxysilan, einsetzt.

10. Verfahren zur Herstellung des devulkanisierten Kautschuks gemäß Anspruch 6, **dadurch gekennzeichnet, dass** man das Vinylsilan in Mengen von 1-20 Gew.-%, bevorzugt 3-10 Gew.-%, bezogen auf den eingesetzten vulkanisierten Kautschuk, einsetzt.

11. Verfahren zur Herstellung des devulkanisierten Kautschuks gemäß Anspruch 6, **dadurch gekennzeichnet, dass** man das Vinylsilan zusammen mit Peroxiden einsetzt.

12. Verfahren zur Herstellung des devulkanisierten Kautschuks nach Anspruch 6, **dadurch gekennzeichnet, dass** als Peroxide Dicumylperoxid und/oder Benzoylperoxid eingesetzt werden.

13. Verfahren zur Herstellung des devulkanisierten Kautschuks gemäß Anspruch 6, **dadurch gekennzeichnet, dass** man das Peroxid in Mengen von 1-20 Gew.-%, bevorzugt 1-10 Gew.-%, bezogen auf das Vinylsilan, einsetzt.

14. Verfahren zur Herstellung des devulkanisierten Kautschuks gemäß Anspruch 6, **dadurch gekennzeichnet, dass** man vulkanisierten Kautschuk aus Altreifen zerkleinert, den zerkleinerten Kautschuk mit Öl quillt und mit Vinyltriethoxysilan und Dicumylperoxid devulkanisiert.

15. Verwendung von Vinylsilanen, gegebenenfalls unter Zugabe von Peroxiden, zur Devulkanisation von Vulkanisaten.

16. Verwendung des devulkanisierten Kautschuks gemäß Anspruch 1 als Rohstoff in vulkanisierten Kautschukmischungen.

17. Vulkanisierte Kautschukmischungen, enthaltend den devulkanisierten Kautschuk gemäß Anspruch 1.

**Revendications**

1. Caoutchouc dévulcanisé obtenu par réaction de caoutchouc vulcanisé avec du vinylsilane, **caractérisé en ce que** la surface totale de particules visibles (TAVP) du caoutchouc dévulcanisé est < 2,7 %, la TAVP étant mesurée comme décrit dans la description.

2. Caoutchouc dévulcanisé selon la revendication 1, **caractérisé en ce qu'**il comprend des motifs structuraux de butadiène et/ou styrène.

3. Caoutchouc dévulcanisé selon la revendication 1, **caractérisé en ce qu'**il contient 10 à 200 phr, de préférence 20 à 120 phr, plus préférablement 30 à 100 phr de silice.

4. Caoutchouc dévulcanisé selon la revendication 1, **caractérisé en ce qu'**il présente un NWB > 50 %, le NWB étant mesuré comme décrit dans la description.

5. Caoutchouc dévulcanisé selon la revendication 1, **caractérisé en ce qu'**il présente un $f_{sol} \geq 12,0$ %, le $f_{sol}$ étant mesuré comme décrit dans la description.

6. Procédé de préparation du caoutchouc dévulcanisé selon la revendication 1, **caractérisé en ce que** le caoutchouc vulcanisé est broyé et mis à réagir avec du vinylsilane comme agent dévulcanisant à des températures comprises entre 140 et 180 °C pendant 4 à 7 minutes avec une concentration d'agent dévulcanisant de 4 à 6 % en poids, par rapport au caoutchouc vulcanisé, et avec un apport d'énergie pendant la réaction de > 140 kNm.

7. Procédé de fabrication du caoutchouc dévulcanisé selon la revendication 6, **caractérisé en ce que** le caoutchouc vulcanisé est broyé au moyen d'un broyage au jet d'eau, cryogénique ou mécanique ambiant.

8. Procédé de préparation du caoutchouc dévulcanisé selon la revendication 6, **caractérisé en ce qu'**avant que le vinylsilane ne soit ajouté, le caoutchouc vulcanisé broyé est gonflé avec une huile.

9. Procédé de préparation du caoutchouc dévulcanisé selon la revendication 6, **caractérisé en ce que** le vinylsilane utilisé comprend un vinyltrialcoxysilane, de préférence le vinyltriéthoxysilane.

10. Procédé de préparation du caoutchouc dévulcanisé selon la revendication 6, **caractérisé en ce que** le vinylsilane est utilisé en des quantités de 1 à 20 % en poids, de préférence de 3 à 10 % en poids, par rapport au caoutchouc vulcanisé utilisé.

11. Procédé de préparation du caoutchouc dévulcanisé selon la revendication 6, **caractérisé en ce que** le vinylsilane est utilisé conjointement avec des peroxydes.

12. Procédé de préparation du caoutchouc dévulcanisé selon la revendication 6, **caractérisé en ce que** des peroxydes utilisés comprennent du peroxyde de dicumyle et/ou du peroxyde de benzoyle.

13. Procédé de préparation du caoutchouc dévulcanisé selon la revendication 6, **caractérisé en ce que** le peroxyde est utilisé en des quantités de 1 à 20 % en poids, de préférence de 1 à 10 % en poids, par rapport au vinylsilane.

14. Procédé de fabrication du caoutchouc dévulcanisé selon la revendication 6, **caractérisé en ce que** du caoutchouc vulcanisé provenant de pneus usagés est broyé et le caoutchouc broyé est gonflé avec une huile et dévulcanisé avec du vinyltriéthoxysilane et du peroxyde de dicumyle.

15. Utilisation de vinylsilanes, éventuellement avec ajout de peroxydes, pour la dévulcanisation de vulcanisats.

16. Utilisation du caoutchouc dévulcanisé selon la revendication 1 comme matière première dans des mélanges de caoutchouc vulcanisé.

**17.** Mélanges de caoutchouc vulcanisé comprenant le caoutchouc dévulcanisé selon la revendication 1.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9683088 B2
- US 5258413 A
- US 11453758 B2

**Non-patent literature cited in the description**

- **ASARO, L.** ; **GRATTON, M** ; **SEGHAR, S.** ; **HOCINE, N.A.** Recycling of rubber wastes by devulcanization.. *Resour. Conserv. Recycl.*, 2018, vol. 133, 250-262
- **EDWARDS, D.W.** ; **DANON, B.** ; **VAN DER GRYP, P** ; **GEORGENS, J.F.** Quantifying and comparing the selectivity for crosslink scission in mechanical and mechanochemical devulcanization processes. *J. Appl. Polym. Sci.*, 2016, vol. 133 (37), 1-10
- **SAIWARI, S.** ; **DIERKES, W.K.** ; **NOORDERMEER, J.W.** Recycling of individual Waste rubber, in: Rubber Recycling: Challenges and Developments. Royal Society of Chemistry, 2018, 186-232
- Devulcanization of EPDM rubber: a mechanistic study into a successful method. **VERBRUGGEN, M.** PhD thesis. University of Twente, 2007, 29-33